# EUROPÄISCHE PATENTSCHRIFT

(11) **EP 1 898 113 B1**
(45) Veröffentlichungstag und Bekanntmachung des Hinweises auf die Patenterteilung: **25.09.2019**
(21) Anmeldenummer: 07015850.6
(22) Anmeldetag: 11.08.2007
(51) Int. Cl.: F16D 48/06

(54) **Kraftfahrzeug-Antriebsstrang und sich auf eine Druckmedium-Aktuatoranordnung insbesondere eines Getriebes oder einer Kupplungseinrichtung beziehendes Betätigungsverfahren**
Motor vehicle power train and actuating method based on a fluid actuator for a transmission or for a clutch device
chaîne cinématique de véhicule et procédé d'actionnement d'un actionneur à fluide agissant sur une transmission ou sur un dispositif d'embrayage

(30) Priorität: 08.09.2006 DE 102006042393
(43) Veröffentlichungstag der Anmeldung: 12.03.2008
(73) Patentinhaber: ZF Friedrichshafen AG, 88046 Friedrichshafen (DE)
(72) Erfinder: Steiner, Eduard, 97070 Würzburg (DE); Terwart, Markus, 97711 Thundorf (DE); Moseler, Olaf, 97440 Werneck (DE); Suckfüll, Gerald, 97531 Theres (DE)

(56) Entgegenhaltungen:
- EP-A1- 1 855 022
- DE-C1- 4 439 448

## Beschreibung

Die Erfindung betrifft ein Kraftfahrzeug-Antriebsstrang, umfassend eine Antriebseinheit, ein Getriebe und ein Kupplungssystem mit einer zwischen der Antriebseinheit und dem Getriebe angeordneten Kupplungseinrichtung zur Momentenübertragung zwischen der Antriebseinheit und dem Getriebe, wobei wenigstens eines von der Kupplungseinrichtung und dem Getriebe unter Vermittlung von Druckmedium betätigbar ist, welches über ein Druckmediumsystem an einer Aktuatoranordnung der Kupplungseinrichtung bzw. einer Aktuatoranordnung des Getriebes mit steuerbarem oder regelbarem Druck unter der Steuerung bzw. Regelung durch eine wenigsten ein Ventil des Druckmediumsystems ansteuernde Steuereinheit anlegbar ist.

Derartige Kraftfahrzeug-Antriebsstränge EP1855022 (Art. 54(3) EPC), DE 4439 448 und DE 103 47 203 A1 bekannt. Die bekannten Antriebsstränge weisen eine Kupplungseinrichtung in Form einer als Mehrfach-Kupplungseinrichtung, speziell Doppel-Kupplungseinrichtung, auf, umfassend eine erste Kupplungsanordnung, der wenigstens ein erster Nehmerzylinder der Aktuatoranordnung zugeordnet ist, und eine zweite Kupplungsanordnung, der wenigstens ein zweiter Nehmerzylinder der Aktuatoranordnung zugeordnet ist, wobei an den beiden Nehmerzylindern unabhängig voneinander durch wenigstens ein jeweils zugeordnetes Ventil Druckmedium, speziell Hydraulikmedium, mit steuerbarem, speziell regelbarem Druck anlegbar ist. Das Vorhandensein einer Steuereinheit, die die der Kupplungseinrichtung bzw. deren Nehmerzylinder zugeordneten Ventile ansteuert sowie Ventile ansteuert, die einer hydraulischen Aktuatoranordnung des Getriebes zugeordnet sind, um mittels, mit Hydraulikmedium beaufschlagbaren, Nehmerzylindern zwei Teilgetriebe des Doppelkupplungsgetriebes zum Einlegen und Auslegen von Gängen zu betätigen, ergibt sich zumindest implizit aus der Gesamtoffenbarung der Offenlegungsschrift. Betreffend die Kupplungsbetätigung ist eine derartige Steuereinheit üblicherweise dafür ausgeführt oder programmiert, durch entsprechende Ansteuerung der der Doppel-Kupplungseinrichtung zugeordneten Ventile eine so genannte Überschneidungsschaltung durchzuführen, bei der eine von der ersten und zweiten Kupplungsanordnung ausgerückt und die andere der ersten und zweiten Kupplungsanordnung abgestimmt auf das Ausrücken der einen Kupplungsanordnung eingerückt wird. In Abstimmung auf diese Kupplungsbetätigung erfolgt ein Schalten des Doppelkupplungsgetriebes, indem die Steuereinheit die der Getriebeaktuatoranordnung zugeordneten Ventile entsprechend ansteuert.

Bei der Kupplungseinrichtung des Kraftfahrzeug-Antriebsstrangs kann es sich insbesondere um eine nasslaufende Lamellenkupplung handeln. Im Falle einer Mehrfach-Kupplungseinrichtung, insbesondere Doppel-Kupplungseinrichtung, können die Kupplungsanordnungen als nasslaufende Lamellen-Kupplungsanordnungen ausgeführt sein.

Beim Schließen einer nasslaufenden Lamellenkupplung oder Lamellenkupplungsanordnung soll häufig das Moment linear angehoben werden. Dies gilt beispielsweise häufig bei der Durchführung einer Überschneidungsschaltung im Zusammenhang mit einer Doppelkupplungseinrichtung. Im Falle einer Betätigung der Kupplungseinrichtung bzw. der Kupplungsanordnungen mittels eines Druckmediums, insbesondere Hydraulikmediums, ist das von der Kupplungseinrichtung bzw. der jeweiligen Kupplungsanordnung übertragbare Drehmoment in der Regel direkt oder annähernd linear abhängig vom Druck. Dies gilt aber nur in einer statischen oder quasi-statischen Betrachtung. In einer dynamischen Betrachtung gilt dieser Zusammenhang nicht oder nur eingeschränkt, da der Einrückvorgang der Kupplungseinrichtung bzw. Kupplungsanordnung noch während der Befüllung des zugeordneten Nehmerzylinders, also im Befüllbereich, beginnt, so dass dem Nehmerzylinder zunächst noch ein großes Druckmediumvolumen zugeführt werden muss, bis die Kupplungseinrichtung bzw. Kupplungsanordnung schließlich nennenswert Drehmoment übertragen kann und das übertragene Drehmoment dem Druckanstieg folgt. Im Falle einer nasslaufenden Lamellenkupplungsanordnung kommt noch hinzu, dass ausgehend von einer geöffneten Kupplungsanordnung in der Regel zuerst noch ein Ölfilm zwischen den Lamellen, der sich im geöffneten Zustand der Kupplungsanordnung gebildet hat, verdrängt werden muss, bis dann schließlich nennenswert Drehmoment übertragen werden kann. All dies verzögert den Momentenaufbau, so dass der ggf. gewünschte lineare Anstieg oder ein anderer definierter Anstieg, der ggf. gewünscht ist, nicht erreicht wird, sondern dass eine Art "Drehmomentloch" auftritt, bevor dann das übertragene bzw. übertragbare Drehmoment dann recht sprunghaft ansteigt und der weitere Drehmomentanstieg dann zumindest annäherungsweise dem Druckanstieg folgt.

Aus den Befüllzeiten der Nehmerzylinder resultierende Schaltzeiten treten nicht nur in Bezug auf die Kupplungsbetätigung, sondern auch in Bezug auf die Getriebebetätigung, etwa Schaltstangenbetätigung des Getriebes, auf. Weitere Totzeiten sind den Ventilen bzw. Schiebern der Druckmedium-Steuereinrichtung, insbesondere Hydraulik-Steuereinrichtung, zuzuschreiben, so dass insgesamt beachtlich verlängerte Schaltzeiten betreffend das Kuppeln bzw. Umkuppeln und die Gangwechsel resultieren, die sich besonders bei Mehrfach-Rückschaltungen des Fahrzeugs nachteilig bemerkbar machen. Insbesondere für sportlich orientierte Fahrer resultieren aus der Kupplungsbetätigung und der Getriebebetätigung zu lange Schaltzeiten, die sich besonders nachteilig bei den angesprochenen Mehrfach-Rückschaltungen (etwa 7-6-3), bemerkbar machen und auch die Spontanität auf Schaltwünsche des Fahrers negativ beeinträchtigen.

Der Erfindung liegt die Aufgabe zugrunde, Lösungen bzw. zumindest Lösungsansätze für die angesprochenen Nachteile bereitzustellen und insbesondere für einen definierten Aufbau des übertragenen bzw. übertragbaren Drehmoments und allgemein vergleichsweise kurze Betätigungszeiten bzw. Schaltzeiten zu sorgen.

Nach einem ersten Aspekt wird für den eingangs angesprochenen Kraftfahrzeug-Antriebsstrang erfindungsgemäß vorgeschlagen, dass die Steuereinheit dafür ausgeführt oder programmiert ist, für die Ausübung einer Soll-Betätigungskraft durch die Aktuatoranordnung bzw. wenigstens eine der Aktuatoranordnungen oder/und für die Erhöhung der mittels der Aktuatoranordnung bzw. wenigstens eine der Aktuatoranordnungen ausgeübten Soll-Betätigungskraft gemäß einer Soll-Kennlinie wenigsten ein der Aktuatoranordnung zugeordnetes Ventils des Druckmediumsystems zuerst für die Abgabe eines Vorbefüllungsvolumens an Druckmedium an die Aktuatoranordnung impulsartig anzusteuern und dann das Ventil für die Ausübung der Soll-Betätigungskraft durch die Aktuatoranordnung bzw. für die Erhöhung der mittels der Aktuatoranordnung ausgeübten Soll-Betätigungskraft gemäß der Soll-Kennlinie anzusteuern.

Es kann beispielsweise ein Druckregelventil kurzzeitig mit einem überhöhten Strom durch Zugabe eines vorbereitenden oder zusätzlichen Strompulses stärker als üblich beaufschlagt werden, damit das Ventil weiter öffnet und somit in kurzer Zeit mehr Druckmediumvolumen in den Nehmerzylinder die Aktuatoranordnung der Kupplungseinrichtung bzw. des Getriebes fließt.

Weiterbildend wird vorgeschlagen, dass die Steuereinheit dafür ausgeführt oder programmiert ist, für die Erhöhung der mittels der Aktuatoranordnung bzw. der wenigstens einen der Aktuatoranordnungen ausgeübten Soll-Betätigungskraft gemäß der Soll-Kennlinie in einer Anfangsphase der Ansteuerung gemäß der Soll-Kennlinie einer einen Anstieg der Soll-Kennlinie widerspiegelnden Ansteuerung des Ventils eine impulsartige Ansteuerung des Ventils für die Abgabe eines weiteren Vorbefüllungsvolumens an Druckmedium an die Aktuatoranordnung zu überlagern. Es kann so beispielsweise durch einen weiteren Strompuls das Druckregelventil kurzzeitig stärker geöffnet werden als es eine Ansteuerung des Ventils entsprechend der Soll-Kennlinie entspricht, um zusätzliches Druckmediumvolumen in den Nehmerzylinder fließen zu lassen. Dieser Weiterbildungsvorschlag ist zugleich als Erfindungsvorschlag nach einem zweiten Aspekt der Erfindung anzusehen.

Demgemäß wird nach dem zweiten Aspekt der Erfindung für den eingangs angesprochenen Kraftfahrzeug-Antriebsstrang erfindungsgemäß vorgeschlagen, dass die Steuereinheit dafür ausgeführt oder programmiert ist, für die Erhöhung der mittels der Aktuatoranordnung bzw. wenigstens eine der Aktuatoranordnungen ausgeübten Soll-Betätigungskraft gemäß einer Soll-Kennlinie wenigsten ein der Aktuatoranordnung zugeordnetes Ventil des Druckmediumsystems für die Abgabe eines Vorbefüllungsvolumens an Druckmedium an die Aktuatoranordnung impulsartig anzusteuern, derart, dass in einer Anfangsphase der Ansteuerung gemäß der Soll-Kennlinie einer einen Anstieg der Soll-Kennlinie widerspiegelnden Ansteuerung des Ventils eine impulsartige Ansteuerung des Ventils für die Abgabe des Vorbefüllungsvolumens überlagert ist. Wie im Falle des Erfindungsvorschlags nach dem ersten Aspekt kann beispielsweise ein Druckregelventil kurzzeitig mit einem überhöhten Strom durch Zugabe eines zusätzlichen Strompulses stärker als entsprechend der Ansteuerung gemäß der Soll-Kennlinie beaufschlagt werden, damit es weiter öffnet und somit in kurzer Zeit mehr Druckmediumvolumen in den Nehmerzylinder der dem Getriebe bzw. der Kupplungseinrichtung zugeordneten Aktuatoranordnung fließt.

Weiterbildend wird vorgeschlagen, dass die Steuereinheit dafür ausgeführt oder programmiert ist, vorausgehend der Ansteuerung des Ventils gemäß der Soll-Kennlinie das Ventil für die Abgabe eines vorausgehenden Vorbefüllungsvolumens an Druckmedium an die Aktuatoranordnung impulsartig anzusteuern. Dies kann durch einen entsprechenden Strompuls erfolgen, der der eigentlichen Ansteuerung des Ventils gemäß der Soll-Kennlinie vorausgeht.

Wie schon angesprochen, kann die Kupplungseinrichtung als Mehrfach-Kupplungseinrichtung, insbesondere Doppel-Kupplungseinrichtung, ausgeführt sein, umfassend eine erste Kupplungsanordnung, der wenigstens ein erster Nehmerzylinder der Aktuatoranordnung zugeordnet ist, und eine zweite Kupplungsanordnung, der wenigstens ein zweiter Nehmerzylinder der Aktuatoranordnung zugeordnet ist, wobei an den beiden Nehmerzylindern unabhängig voneinander durch wenigstens ein jeweils zugeordnetes Ventil Druckmedium mit steuerbarem bzw. regelbarem Druck anlegbar ist.

Die Erfindungs- und Weiterbildungsvorschläge nach dem ersten und zweiten Aspekt können sich insbesondere auf die Betätigung dieser Kupplungseinrichtung und speziell auf eine so genannte Überscheidungsschaltung beziehen. Diesbezüglich wird speziell vorgeschlagen, dass die Steuereinheit dafür ausgeführt oder programmiert ist, vor bzw. während einer Überschneidungsschaltung, bei der eine von der ersten und zweiten Kupplungsanordnung auszurücken und die andere der ersten und zweiten Kupplungsanordnung abgestimmt auf das Ausrücken der einen Kupplungsanordnung einzurücken ist, für die Abgabe des Vorbefüllungsvolumens bzw. des weiteren Vorbefüllungsvolumens bzw. des vorausgehenden Vorbefüllungsvolumens an die der einzurückenden Kupplungsanordnung zugeordnete Aktuatoranordnung das betreffende wenigstens eine Ventil entsprechend anzusteuern.

Ferner wird im Zusammenhang mit der Mehrfach-Kupplungseinrichtung bzw. Doppel-Kupplungseinrichtung allgemein vorgeschlagen, dass die Steuereinheit dafür ausgeführt oder programmiert ist, das wenigstens eine dem ersten Nehmerzylinder zugeordnete Ventil und das wenigstens eine dem zweiten Nehmerzylinder zugeordnete Ventil jeweils für die Abgabe des Vorbefüllungsvolumens an den betreffenden Nehmerzylinder oder/und für die Abgabe des weiteren Vorbefüllungsvolumens an den betreffenden Nehmerzylinder anzusteuern.

Ferner wird daran gedacht, die Erfindungs- und Weiterbildungsvorschläge nach dem ersten und zweiten Aspekt in Bezug auf eine Getriebebetätigung, also für ein schnelles Ein- und Auslegen eines jeweiligen Getriebegangs, anzuwenden und ein jeweiliges Ventil bzw. jeweilige Ventile, die der Getriebebetätigung dienen, für die Abgabe des Vorbefüllungsvolumens bzw. des weiteren Vorbefüllungsvolumens bzw. des vorausgehenden Vorbefüllungsvolumens an die Aktuatoranordnung des Getriebes bzw. einen jeweiligen Nehmerzylinder dieser Aktuatoranordnung anzusteuern.

Bezug nehmend auf die Betätigung der Mehrfach-Kupplungseinrichtung bzw. der Doppel-Kupplungseinrichtung wird nach einem weiteren Aspekt weiterbildend vorgeschlagen, dass die Steuereinheit dafür ausgeführt oder programmiert ist, den Druck des an zumindest einem des ersten und zweiten Nehmerzylinder angelegten bzw. anliegenden Druckmediums mittels eines dem Nehmerzylinder zugeordneten Drucksensors zu erfassen und das dem anderen des ersten und zweiten Nehmerzylinders zugeordnete Ventil in Abhängigkeit von diesem erfassten Druck anzusteuern. Dieser Vorschlag ist auch als eigenständiger Erfindungsvorschlag nach einem dritten Aspekt anzusehen.

Demgemäß stellt die Erfindung nach einem dritten Aspekt bereit einen Kraftfahrzeug-Antriebsstrang, umfassend eine Antriebseinheit, ein Getriebe und ein Kupplungssystem mit einer zwischen der Antriebseinheit und dem Getriebe angeordneten Kupplungseinrichtung zur Momentenübertragung zwischen der Antriebseinheit und dem Getriebe, wobei zumindest die Kupplungseinrichtung unter Vermittlung von Druckmedium betätigbar ist, welches über ein Druckmediumsystem an einer Aktuatoranordnung der Kupplungseinrichtung mit steuerbarem oder regelbarem Druck unter der Steuerung bzw. Regelung durch eine wenigsten ein Ventil des Druckmediumsystems ansteuernde Steuereinheit anlegbar ist, wobei die Kupplungseinrichtung als Mehrfach-Kupplungseinrichtung, insbesondere Doppel-Kupplungseinrichtung ausgeführt ist, umfassend eine erste Kupplungsanordnung, der wenigstens ein erster Nehmerzylinder der Aktuatoranordnung zugeordnet ist, und eine zweite Kupplungsanordnung, der wenigstens ein zweiter Nehmerzylinder der Aktuatoranordnung zugeordnet ist, wobei an den beiden Nehmerzylindern unabhängig voneinander durch wenigstens ein jeweils zugeordnetes Ventil Druckmedium mit steuerbarem bzw. regelbarem Druck anlegbar ist. Erfindungsgemäß wird für diese Kraftfahrzeug-Antriebsstrang vorgeschlagen, dass die Steuereinheit dafür ausgeführt oder programmiert ist, den Druck des an zumindest einem des ersten und zweiten Nehmerzylinder angelegten bzw. anliegenden Druckmediums mittels eines dem Nehmerzylinder zugeordneten Drucksensors zu erfassen und das dem anderen des ersten und zweiten Nehmerzylinders zugeordnete Ventil in Abhängigkeit von diesem erfassten Druck anzusteuern.

Dies ermöglicht beispielsweise die unter Umständen noch nicht hinreichende Drehmomentübertragungsfähigkeit der einen Kupplungsanordnung durch eine erhöhte Drehmomentübertragungsfähigkeit der anderen Kupplungsanordnung zu kompensieren, beispielsweise auch im Zusammenhang mit einer Überscheidungsschaltung.

Diesbezüglich wird speziell vorgeschlagen, dass die Steuereinheit dafür ausgeführt oder programmiert ist, bei einer/der Überschneidungsschaltung, bei der eine von der ersten und zweiten Kupplungsanordnung auszurücken und die andere der ersten und zweiten Kupplungsanordnung abgestimmt auf das Ausrücken der einen Kupplungsanordnung einzurücken ist, mittels des zugeordneten Drucksensors den ansteigenden Druck des an dem der einzurückenden Kupplungsanordnung zugeordneten Nehmerzylinder anliegenden Druckmediums zu erfassen und durch Ansteuerung des Ventils, welches dem der auszurückenden Kupplungsanordnung zugeordneten Nehmerzylinder zugeordnet ist, den Druck des an diesem Nehmerzylinder anliegenden Druckmediums in Abhängigkeit vom erfassten Druckanstieg definiert abzusenken. Es können so dynamische Effekte, die sich aus der Befüllung des der einzurückenden Kupplungsanordnung zugeordneten Nehmerzylinders ergeben, ausgeglichen werden.

Besonders bevorzugt ist, dass die Steuereinheit dafür ausgeführt oder programmiert ist, durch aufeinander abgestimmte Ansteuerung der den Nehmerzylindern zugeordneten Ventile während der Überschneidungsschaltung einen Soll-Verlauf des über die erste und die zweite Kupplungsanordnung übertragbaren Gesamt-Drehmoments zu erreichen, indem ein jeweiliger Druckanstieg des an dem der einzurückenden Kupplungsanordnung zugeordneten Nehmerzylinder anliegenden Druckmediums von einer den gewünschten Soll-Verlauf ergebenden Druckabsenkung des an dem der auszurückenden Kupplungsanordnung zugeordneten Nehmerzylinder anliegenden Druckmediums begleitet ist. Es kann beispielsweise erreicht werden, dass das über die beiden Kupplungsanordnungen insgesamt übertragbare Drehmoment während der Überschneidungsschaltung konstant bleibt. Sind die beiden Kupplungsanordnungen unterschiedlich ausgelegt, so kann dies durch eine Skalierung der Druckmediumdrücke berücksichtigt werden.

In diesem Zusammenhang wird weiterbildend vorgeschlagen, dass die Steuereinheit dafür ausgeführt oder programmiert ist, das Ventil, welches dem der auszurückenden Kupplungsanordnung zugeordneten Nehmerzylinder zugeordnet ist, derart in Abhängigkeit vom erfassten Druck anzusteuern, dass ein Druckinkrement des erfassten ansteigenden Drucks und ein durch die Ansteuerung des Ventils resultierendes Druckdekrement des abfallenden Drucks in einem definierten vorgegebenem Verhältnis stehen.

Es wird daran gedacht, dass der Aktuatoranordnung oder wenigstens einer der Aktuatoranordnungen wenigstens ein durch die Steuereinheit elektrisch ansteuerbares Vorsteuerventil und ein diesem im Druckmediumsystem nachgeschaltetes Druckübersetzungsventil, ggf. Nachfolgeschieberventil, zugeordnet ist, wobei das Druckübersetzungsventil vom Vorsteuerventil unter der Ansteuerung durch die Steuereinheit abgegebenes Druckmedium empfängt und in Abhängigkeit vom Druck des empfangenen Druckmediums Druckmedium auf einem höheren Druckniveau an die Aktuatoranordnung abgibt. Ein solches Vorsteuerventil und Druckübersetzungsventil kann der Aktuatoranordnung des Getriebes oder/und der Aktuatoranordnung der Kupplungseinrichtung zugeordnet sein. Dieser Weiterbildungsvorschlag ist auch als unabhängiger Erfindungsvorschlag nach einem vierten Aspekt anzusehen.

Demgemäß wird nach einem vierten Aspekt für den eingangs identifizierten Kraftfahrzeug-Antriebsstrang erfindungsgemäß vorgeschlagen, dass der Aktuatoranordnung oder wenigstens einer der Aktuatoranordnungen wenigstens ein durch die Steuereinheit elektrisch ansteuerbares Vorsteuerventil und ein diesem im Druckmediumsystem nachgeschaltetes Druckübersetzungsventil, ggf. Nachfolgeschieberventil, zugeordnet ist, wobei das Druckübersetzungsventil vom Vorsteuerventil unter der Ansteuerung durch die Steuereinheit abgegebenes Druckmedium empfängt und in Abhängigkeit vom Druck des empfangenen Druckmediums Druckmedium auf einem höheren Arbeitsdruckniveau an die Aktuatoranordnung abgibt.

Für eine schnelle Getriebebetätigung oder/und Kupplungsbetätigung, insbesondere zur Reduzierung oder Vermeidung von nachteiligen Schaltzeiten wird weiterbildend bzw. nach einem von dem vierten Aspekt ausgehenden fünften Aspekt der Erfindung vorgeschlagen, dass die Steuereinheit dafür ausgeführt oder programmiert ist, zumindest in einem Bereitschaftszustand oder zumindest für die Vorbereitung der Ausübung einer Soll-Betätigungskraft oder Soll-Einrückkraft durch die Aktuatoranordnung bzw. wenigstens eine der Aktuatoranordnungen oder/und der Erhöhung der mittels der Aktuatoranordnung bzw. wenigstens eine der Aktuatoranordnungen ausgeübten Soll-Betätigungskraft oder Soll-Einrückkraft gemäß einer Soll-Kennlinie das der Aktuatoranordnung zugeordnete Vorsteuerventil derart anzusteuern, dass es Druckmedium auf einem Vorbereitungs-Druckniveau an das Druckübersetzungsventil abgibt, bei dem dieses Druckmedium auf einem Vorbereitungs-Arbeitsdruckniveau an die Aktuatoranordnung abgibt, um Totzeiten bei der Ausübung von Betätigungskräften mittels der Aktuatoranordnung zu vermeiden oder zu reduzieren.

Dabei kann vorteilhaft vorgesehen sein, dass die Steuereinheit dafür ausgeführt ist, in einem Ruhezustand das der Aktuatoranordnung zugeordnete Vorsteuerventil nicht oder derart anzusteuern, dass es keine Druckmedium oder Druckmedium auf einem für eine Ansteuerung des Druckübersetzungsventils zu geringen Druckniveau an das Druckübersetzungsventil abgibt. Hieran anknüpfend wird weiterbildend vorgeschlagen, dass die Steuereinheit dafür ausgeführt ist, in Abhängigkeit von wenigstens einem Betriebszustand oder wenigstens einem Betriebsparameter des Antriebsstrangs oder einer Komponente des Antriebsstrangs zwischen dem Bereitschaftszustand und dem Ruhezustand umzuschalten.

Es kann so erreicht werden, dass im Bereitschaftszustand unter Umständen auftretende Leckagen nur dann auftreten, wenn dies unproblematisch ist. Auch lässt sich so der Energieverbrauch minimieren, ohne dass nachteilige Totzeiten im praktischen Betrieb in Kauf genommen werden müssen. Zweckmäßig kann das Umschalten zwischen den Zuständen gemäß einer Hysterese erfolgen, um ein ständiges Umschalten in Folge von geringen Betriebszustandsänderungen oder Betriebsparameteränderungen zu vermeiden.

Nach dem ersten bzw. zweiten Aspekt stellt die Erfindung ferner bereit ein Betätigungsverfahren zur Betätigung mittels einer Aktuatoranordnung auf Grundlage von vermittels wenigstens einem Ventil der Aktuatoranordnung zugeführtem Druckmedium, umfassend eine impulsartige Vorbefüllung eines Nehmerzylinders der Aktuatoranordnung mit Druckmedium vorausgehend einer kontinuierlichen Befüllung des Nehmerzylinders für die Ausübung einer Soll-Betätigungskraft oder Soll-Einrückkraft durch die Aktuatoranordnung bzw. wenigstens eine der Aktuatoranordnungen oder/und für die Erhöhung der mittels der Aktuatoranordnung bzw. wenigstens eine der Aktuatoranordnungen ausgeübten Soll-Betätigungskraft oder Soll-Einrückkraft gemäß einer Soll-Kennlinie oder/und umfassend eine der kontinuierlichen Befüllung des Nehmerzylinders überlagerte impulsartige Vorbefüllung oder weitere impulsartige Vorbefüllung des Nehmerzylinders.

Nach dem dritten Aspekt stellt die Erfindung ferner bereit ein Betätigungsverfahren zur aufeinander abgestimmten Betätigung mittels mehreren Aktuatoranordnungen auf Grundlage von vermittels wenigstens einem jeweiligen Ventil der jeweiligen Aktuatoranordnung zugeführten Druckmedium, umfassend die Reduzierung oder Erhöhung des Drucks des an wenigstens einem Nehmerzylinder einer Aktuatoranordnung anliegenden Druckmediums in Abhängigkeit von dem Druck des an wenigstens einem Nehmerzylinder einer anderen Aktuatoranordnung anliegenden Druckmediums.

Weiterbildend wird vorgeschlagen, dass der Druck des an dem Nehmerzylinder der anderen Aktuatoranordnung anliegenden Druckmediums erhöht wird und in Abhängigkeit der tatsächlichen Druckerhöhung der Druck des an dem Nehmerzylinder der einen Aktuatoranordnung anliegenden Druckmediums reduziert wird. Dabei kann vorteilhaft vorgesehen werden, dass der Druck des an dem Nehmerzylinder der einen Aktuatoranordnung anliegenden Druckmediums derart reduziert wird, dass eine summarische Folgewirkung der Betätigung mittels beider Aktuatoranordnungen konstant bleibt oder sich definiert ändert.

Nach dem vierten und fünften Aspekt der Erfindung wird ferner bereitgestellt ein Betätigungsverfahren zur Betätigung mittels einer Aktuatoranordnung auf Grundlage von vermittels wenigstens einem Vorsteuerventil und wenigstens einem diesem nachgeschalteten Druckübersetzungsventil, ggf. Nachfolgeschieberventil, der Aktuatoranordnung zugeführtem Druckmedium, umfassend eine vorbereitende Ansteuerung des Vorsteuerventils derart, dass es Druckmedium auf einem Vorbereitungs-Druckniveau an das Druckübersetzungsventil abgibt, bei dem dieses Druckmedium auf einem noch keine Betätigung auslösenden Vorbereitungs-Arbeitsdruckniveau an die Aktuatoranordnung abgibt, um Totzeiten bei der Betätigung mittels der Aktuatoranordnung zu vermeiden oder zu reduzieren.

Das jeweilige Betätigungsverfahren oder ein mehrere oder alle der Betätigungsverfahren umfassendes übergeordnetes Betätigungsverfahren kann in Bezug auf wenigstens eine Aktuatoranordnung eines Getriebes oder/und in Bezug auf wenigstens eine Aktuatoranordnung einer Kupplungseinrichtung, ggf. Mehrfach- oder Doppel-Kupplungseinrichtung, durchgeführt werden.

Es wird insbesondere daran gedacht, dass das Betätigungsverfahren bzw. das übergeordnete Betätigungsverfahren durch die Steuereinheit eines erfindungsgemäßen Kraftfahrzeug-Antriebsstrangs im Wege der Ansteuerung wenigstens eines der bzw. einer jeweiligen Aktuatoranordnung zugeordneten Ventils durchgeführt wird. Das Betätigungsverfahren bzw. das übergeordnete Betätigungsverfahren kann weitere sich aus den Angaben zum Kraftfahrzeug-Antriebsstrang nach dem ersten, zweiten, dritten, vierten und fünften Aspekt ergebende Verfahrensmerkmale und/oder sich hieraus ergebende Vorrichtungsmerkmale als Basis für die Verfahrensdurchführung aufweisen.

Die Erfindung wird im Folgenden anhand von in den Figuren gezeigten Ausführungsbeispielen näher erläutert.
- Fig. 1: zeigt ein Beispiel für eine einer Doppelkupplung zugeordneten Aktuatoranordnung, die zwei Nehmerzylinder aufweist, mit einem zugehörigen, die Nehmerzylinder mit hydraulischem Druckmittel versorgenden, Druckregelventile aufweisenden hydraulischen Druckmediumsystem.
- Fig. 2: zeigt exemplarisch ein Druck- und Drehmomentaufbauverhalten bei einer hydraulisch betätigten Kupplung des NORMALERWEISE-OFFEN-Typs.
- Fig. 3: zeigt eine typische Druck-Strom-Ventilcharakteristik eines hydraulischen Druckregelventils.
- Fig. 4: zeigt im Diagramm a) den Momentenverlauf und ein resultierendes Summenmoment bei der Durchführung einer Überschneidungsschaltung mittels einer Doppelkupplung nach dem Stand der Technik und im Diagramm b) einen bei einer solchen Überschneidungsschaltung erfindungsgemäß erreichbaren Drehmomentenverlauf.
- Fig. 5: zeigt im Diagramm a) erneut einen Drehmomentenverlauf bei einer Überschneidungsschaltung einer Doppelkupplung nach dem Stand der Technik und in den Diagrammen b1), b2) und b3) einen demgegenüber nach einem anderen Ansatz der Erfindung erreichbaren Momentenverlauf bei der Überschneidungsschaltung mit resultierendem Betätigungsdruckanstieg für die einzurückende Kupplung und diesem zugrunde liegende Bestromung eines zugeordneten Druckregelventils.
- Fig. 6: zeigt exemplarisch in Frage kommende Varianten für einen Bestromungspuls zur Vorbefüllung bzw. Nachbefüllung eines Nehmerzylinders etwa während der Durchführung einer Überschneidungsschaltung.
- Fig. 7: zeigt ein Beispiel für ein einer nasslaufenden, hydraulisch betätigbaren Doppelkupplungseinrichtung und einem hydraulisch betätigbaren Doppelkupplungsgetriebe zugeordnetes Hydrauliksystem als Teil eines erfindungsgemäßen Antriebsstrangs, strukturell weitgehend entsprechend einer bekannten Lösung gemäß Fig. 40 der DE 103 47 203 A1, auf welches Erfindungsvorschläge der vorliegenden Erfindung anwendbar sind, ggf. mit entsprechender Änderung der Struktur des Hydrauliksystems.
- Fig. 8: zeigt die Kombination0 eines elektrisch ansteuerbaren Vorsteuerventils mit einem durch das Vorsteuerventil hydraulisch ansteuerbaren Druckübersetzungsventils, die nach einem weiteren Aspekt der Erfindung ein jeweiliges Druckregelventil, etwa beim Hydrauliksystem gemäß Fig. 1 und beim Hydrauliksystem gemäß Fig. 7, ersetzen können.
- Fig. 9: zeigt das als Nachfolge-Schieberventil ausgeführte Druckübersetzungsventil in Teilfigur 9a) in einem Druckregelzustand bzw. in einer Druckregelstellung und in Teilfigur 9b) in einem Ruhezustand oder in einer Ruhestellung ohne eingangsseitigen Steuerdruck von Seiten des Vorsteuerventils.

Die Grundlagen der hydraulischen Betätigung einer Doppelkupplung und eines Doppelkupplungsgetriebes, auf die sich die Erfindung vorrangig, aber nicht ausschließlich, bezieht, sind aus der DE 103 47 203 A1 und dem darin zitierten Stand der Technik bekannt. Der Inhalt dieser Offenlegungsschrift wird in die Offenbarung der vorliegenden Anmeldung einbezogen, ebenso wie der Inhalt der DE 100 04 179 A1, die eine in Frage kommende nasslaufende Doppelkupplungskonstruktion zeigt. Verschiedene Aspekte der Erfindung sind aber auch auf einfache, hydraulisch betätigte Kupplungen und die hydraulische Betätigung einfacher Getriebe anwendbar sowie auch in völlig anderem Zusammenhang anwendbar, so dass die im Folgenden behandelte Anwendungssituation nur als Beispiel anzusehen ist.

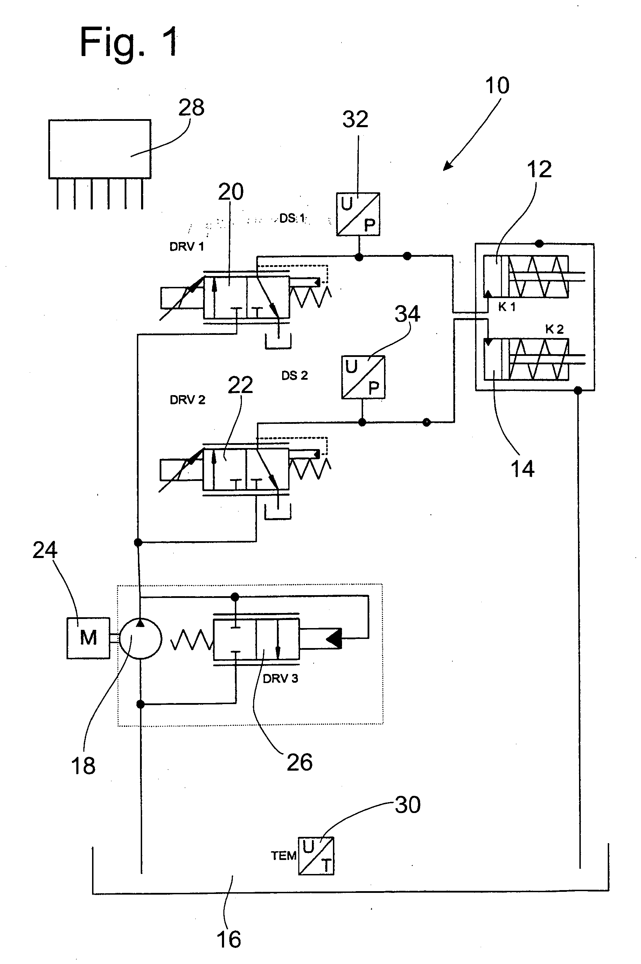

Fig. 1 zeigt eine an sich im Wesentlichen schon bekannte Struktur eines einer hydraulisch betätigbaren Doppelkupplung zugeordneten Hydrauliksystemabschnitts 10, welcher zur Druckbeaufschlagung eines ersten hydraulischen Nehmerzylinders 12 und eines zweiten hydraulischen Nehmerzylinders 14 dient, welche jeweils zur Betätigung, insbesondere zum Einrücken, einer jeweiligen ersten bzw. zweiten Kupplungsanordnung einer Doppelkupplung insbesondere des NORMALERWEISE-OFFEN-Typs dienen. Es kann sich beispielsweise um nasslaufende Lamellenkupplungsanordnungen handeln, wie etwa aus der DE 100 04 179 A1 bekannt.

Aus einem Hydraulikölreservoir 16 saugt eine Pumpe 18 Hydrauliköl an und stellt dieses mit einem definierten Eingangsdruck einem dem ersten hydraulischen Nehmerzylinder 12 zugeordneten Druckregelventil 20 und einem dem zweiten hydraulischen Nehmerzylinder 14 zugeordneten Druckregelventil 22 eingangsseitig zur Verfügung. Die Druckölpumpe 18 wird durch den Antriebsmotor des Antriebsstrangs oder elektromotorisch angetrieben, wie durch den Motor 24 symbolisiert. Ein druckbegrenzend wirkendes Druckregelventil 26 sorgt für die Bereitstellung eines definierten Eingangsdrucks zu den Druckregelventilen 20 und 22, unabhängig von der Drehzahl des Motors 24. Das Druckregelventil 26 arbeitet auf rein hydraulischem Wege, ohne elektrische Ansteuerung.

Demgegenüber werden die Druckregelventile 20 und 22 durch eine elektronische Steuereinheit 28 angesteuert, die vorzugsweise programmgesteuert arbeitet. Die Steuereinheit 28 empfängt ein die Temperatur des Drucköls angebendes Messsignal von einem Temperatursensor 30 sowie Messsignale von einem dem Druckregelventil 20 zugeordneten Drucksensor 32 und einem dem Druckregelventil 22 zugeordneten Drucksensor 34, die den Druck des am hydraulischen Nehmerzylinder 12 bzw. 14 anliegenden Drucköls erfassen.

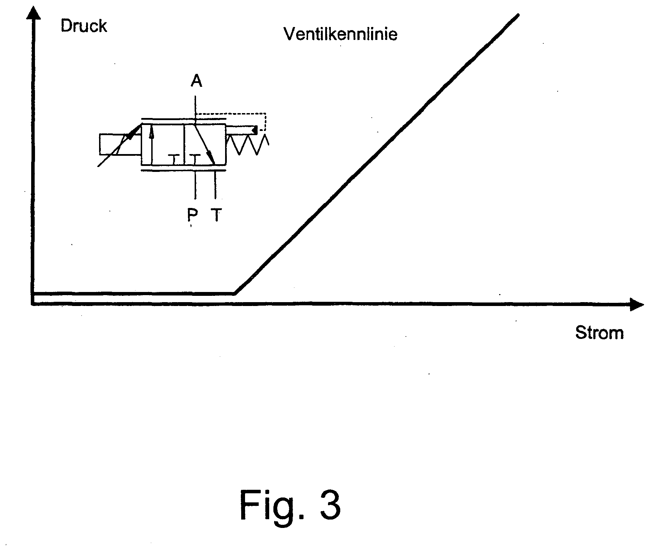

Ein Problem bei der hydraulischen Betätigung von Kupplungen ebenso wie bei der hydraulischen Betätigung von Getrieben ist, dass der in einem jeweiligen Nehmerzylinder resultierende hydraulische Betätigungsdruck nicht ohne weiteres und unverzögert einer einen Soll-Druck repräsentierenden elektrischen Ansteuerung des jeweiligen Druckregelventils folgt oder entspricht. Dies würde nur statisch oder quasi-statisch gelten, nicht aber dynamisch, da die Nehmerzylinder erst noch mit Hydraulikmedium befüllt werden müssen. Die Kupplungsbetätigung bzw. Getriebebetätigung beginnt schon während des Befüllens des jeweiligen Nehmerzylinders. Fig. 3 zeigt den sich nur statisch bzw. quasi-statisch ergebenden Idealzusammenhang zwischen der Bestromung eines Druckregelventils und dem resultierenden Druck. P bezeichnet den Versorgungsdruckanschluss, T den Tankdruckanschluss und A den Arbeitsdruckanschluss des Druckregelventils.

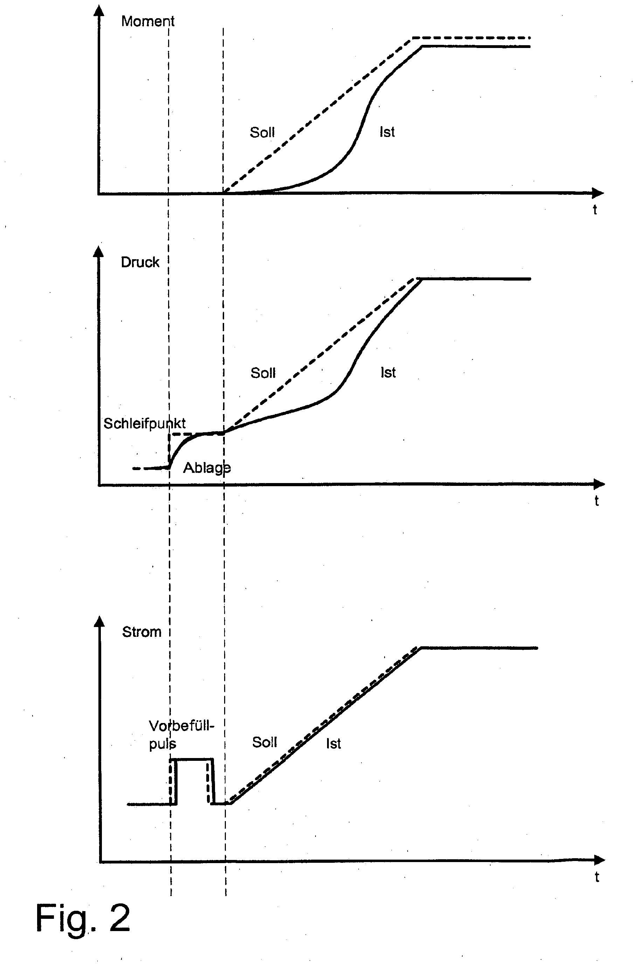

Selbst wenn die ein jeweiliges Druckregelventil ansteuernde Steuereinheit dafür ausgelegt ist, vor der eigentlichen Betätigungsansteuerung für eine Betätigung einer Kupplung oder eines Getriebes das Druckregelventil mit einem Vorbefüllungspuls anzusteuern, um ein Vorbefüllungsvolumen an Drucköl (allgemein Druckmedium) dem jeweiligen Nehmerzylinder zuzuführen, resultiert immer noch eine deutliche Abweichung des tatsächlichen Drucks vom Soll-Druck und - im Falle einer Kupplungsbetätigung - des tatsächlichen übertragbaren bzw. übertragenen Drehmoments vom Soll-Drehmoment. Dies ist in Fig. 2 veranschaulicht, die sich auf das Einrücken einer Kupplung, beispielsweise bei der Durchführung einer Überschneidungsschaltung, bezieht. Es wird das Druckregelventil ausweislich des Strom-Zeit-Diagramms mit einem Vorbefüllungs-Strompuls beaufschlagt, bevor dann der Strom linear mit der Zeit erhöht wird für eine Erhöhung des Betätigungsdrucks und des resultierenden Drehmoments bzw. der resultierenden Drehmomentübertragbarkeit.

Durch den zusätzlichen Strompuls wird das Stromregelventil für eine gewisse Zeitdauer geöffnet, so dass in einer vergleichsweise kurzen Zeit ein entsprechend großes Hydraulikölvolumen in den betreffenden Nehmerzylinder fließt. Es zeigt sich eine entsprechende Auswirkung des Vorbefüllungspulses im Druck-Zeit-Diagramm, so dass die anschließende lineare Erhöhung des Stroms zu einem Druckanstieg führt, der von einem gegenüber dem Druck Null erhöhten Druckniveau ausgeht. Vorzugsweise ist der Vorbefüllungspuls so hinsichtlich Stromhöhe und Dauer gewählt, dass die Kupplung durch den Kolben des Nehmerzylinders in die Nähe des Schleifpunkts gefahren wird.

Im Falle einer Nasslaufkupplung ist im Gegensatz zu einer - ebenfalls im Zusammenhang mit der Erfindung in Frage kommenden - Trockenkupplung der Schleifpunkt weniger genauer definiert als im Falle der Trockenkupplung. Als Schleifpunkt kann bei einer Nasslaufkupplung zweckmäßig eine ungefähre Kolbenposition bzw. ein eine ungefähre Kolbenposition ergebender Druck definiert werden, bei der das Lüftspiel des Lamellenpakets so gering ist, dass nur noch wenig, durch die Newton'sche Schubspannung bedingtes Moment (Schleppmoment) übertragen wird, beispielsweise kleiner als 5 Nm.

Wird nun ausgehend von dieser Kolbenposition, die aufgrund der Charakteristik einer Kolbenrückstellfeder des Nehmerzylinders oder einer Rückstellfederanordnung des Lamellenpakets einem bestimmten Betätigungsdruck entspricht, der elektrische Strom des Druckregelventils, über das der Kupplungsbetätigungsdruck eingestellt werden soll, linear angehoben, um einen etwa linearen Anstieg des Drucks und damit des Moments zu erreichen, so zeigt sich aber, dass trotz des Vorbefüllungsimpulses der Druck dem Strom nicht direkt folgt und dass überdies auch das übertragene bzw. übertragbare Drehmoment nicht direkt dem Druck folgt, wie sich aus einem Vergleich des Druck-Zeit-Diagramms mit dem Strom-Zeitdiagramm und aus einem Vergleich des Moment-Zeit-Diagramms mit dem Druck-Zeit-Diagramm der Fig. 2 exemplarisch ergibt.

Die zentralen Ursachen für dieses Verhalten sind die folgenden: Der lineare Zusammenhang zwischen dem Ventilstrom und dem Ventildruck, etwa entsprechend Fig. 3, gilt nur dann, wenn am Arbeitsdruckanschluss A des Ventils ein konstanter Hydraulikölabfluss auftritt. Wie schon angesprochen, muss der Kolben aber ausgehend vom Schleifpunkt noch einen gewissen Verstellweg zurücklegen, bis die eingangsseitige und ausgangsseitigen Lamellen aneinander annähernd anliegen. In dieser Phase der Befüllung des hydraulischen Nehmerzylinders fließt viel Öl in den Kolbenraum, ohne dass der Druck stark ansteigen kann. Erst wenn durch die Verstellung des Kolbens das Lüftspiel an den Lamellen überwunden wurde, steigt der wirksame Druck steil an und kann schließlich - mit einer gewissen Verzögerung - dem Ventilstrom folgen.

Detailliertere Untersuchungen haben ferner ergeben, dass das Drehmoment tatsächlich dem Druck erst nach einer weiteren Verzögerung folgt. Dies kann auf einen noch vorhandenen Ölfilm zwischen den Lamellen zurückgeführt werden, der beim Schließen der Kupplung erst noch verdrängt werden muss, bis schließlich ein über das Schleppmoment hinaus gehendes Moment übertragen werden kann.

Ein solches, in Fig. 2 exemplarisch gezeigtes Verhalten ist nicht erwünscht, insbesondere im Zusammenhang mit einer Überschneidungsschaltung bei einer Doppelkupplung und einem Doppelkupplungsgetriebe. In der Regel soll bei einer Überschneidungsschaltung die Summe der von beiden Kupplungsanordnungen übertragenen Kupplungsmomente konstant bleiben und gleich einem Soll-Wert, in der Regel gleich dem Motormoment, sein, um einen Momentenrückgang und damit ggf. ein Weglaufen des Motors, insbesondere Verbrennungsmotors, und eine Reduktion des Antriebsmoments zu vermeiden. Ziel der Überschneidungsschaltung ist in der Regel gerade die Vermeidung einer Zugkraftunterbrechung.

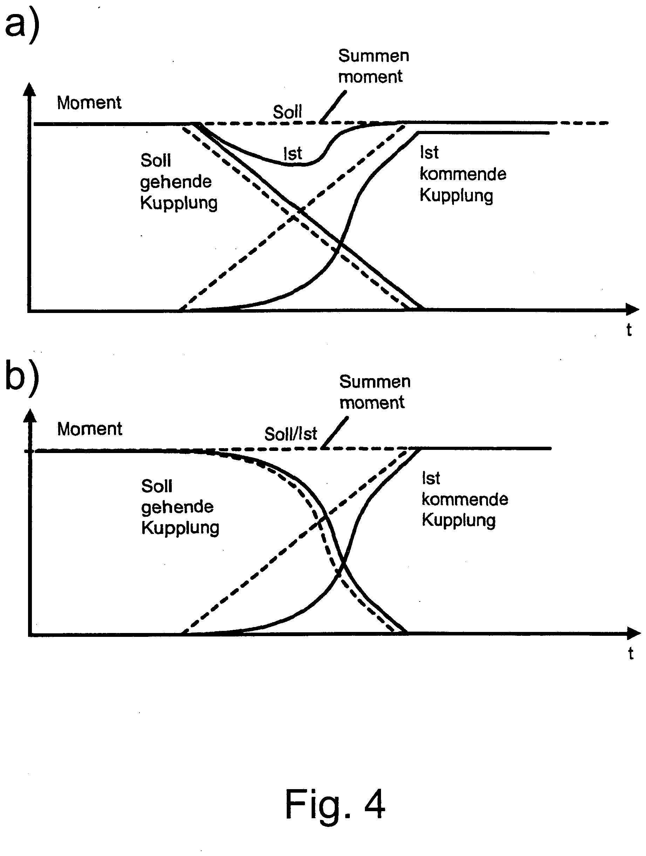

In der Praxis kann das Moment der bei der Überschneidungsschaltung auszurückenden, also der "gehenden" oder momentenabbauenden Kupplungsanordnung dem Soll-Wert recht gut folgen, da durch das dem betreffenden Nehmerzylinder zugeordnete Druckregelventil definiert Hydrauliköl aus dem Nehmerzylinder abgelassen wird, um eine definierte Druckreduzierung und damit eine definierte Momentenreduzierung zu erreichen. Verursacht durch das im Zusammenhang mit Fig. 2 erläuterte Verhalten steigt demgegenüber jedoch das Moment bzw. der Betätigungsdruck der bei der Überschneidungsschaltung einzurückenden oder "kommenden" oder momentenaufbauenden Kupplung nur verzögert an. Dieser Sachverhalt ist für die angesprochene Überschneidungsschaltung im Diagramm a) der Fig. 4 gezeigt. Der in durchgezogener Linie dargestellte Ist-Wert des Moments der gehenden Kupplung folgt gut dem gestrichelt dargestellten Soll-Wert für diese Kupplung, wohingegen für die kommende Kupplung eine starke Diskrepanz zwischen Ist-Wert und Soll-Wert besteht. Es resultiert ein Drehmomentloch im Ist-Wert des Summenmoments.

Um hier Abhilfe zu schaffen, wird nach einem Aspekt der Erfindung vorgeschlagen, die Summe der beiden Kupplungsmomente dadurch konstant zu halten, dass der Ist-Wert des Drucks der gehenden Kupplung im gleichen Maße reduziert wird, wie der Ist-Wert der kommenden Kupplung ansteigt. Bezug nehmend auf das Ausführungsbeispiel der Fig. 1 kann der Druck des am Nehmerzylinder 12 bzw. 14 der kommenden Kupplung angelegten Hydrauliköls durch den Drucksensor 32 und 34 gemessen werden, so dass die Steuereinheit 28 das der gehenden Kupplung zugeordnete Druckregelventil definiert so ansteuern kann, dass der Druck des an deren Nehmerzylinder angelegten Hydrauliköls genau entsprechend dem ansteigenden, auf die kommende Kupplung wirkenden Betätigungsdruck absinkt und so ein im Wesentlichen konstant bleibendes Summenmoment resultiert, wie im Diagramm b) der Fig. 4 veranschaulicht. Dabei ist zu berücksichtigen, dass die Kupplungen (Kupplungsanordnungen) unterschiedlich ausgelegt sein können, dass beispielsweise die eine Kupplung bei einem Betätigungsdruck von 10 bar beispielsweise 500 Nm und die andere Kupplung bei einem Betätigungsdruck von 10 bar beispielsweise 1000 Nm überträgt. Da das Ziel der Durchführung der Überschneidungsschaltung die Momentenübergabe von der einen zur anderen Kupplungsanordnung ist, müssen die auf die Kupplungsanordnungen wirkende Betätigungsdrücke entsprechend skaliert werden. Fig. 4 zeigt die resultierenden Momente und gilt somit exemplarisch sowohl für eine Situation, bei der die Moment-Druck-Beziehung für beide Kupplungen gleich ist, als auch für eine Situation, bei der für die beiden Kupplungen unterschiedliche Moment-Druck-Beziehungen gelten.

Durch die angesprochene Betätigung der einen Kupplung in Abhängigkeit von der erfassten Betätigung der anderen Kupplung werden wesentliche Probleme des Stands der Technik überwunden. Es besteht aber immer noch insoweit Verbesserungsbedarf, als dass kürzere Überschneidungszeiten wünschenswert wären, beispielsweise für Sportschaltungen, insbesondere schon in den niedrigen Gängen, und bei Kickdown-Anfahrten. Hierzu ist ein schnelles Schließen der kommenden Kupplungsanordnung erforderlich.

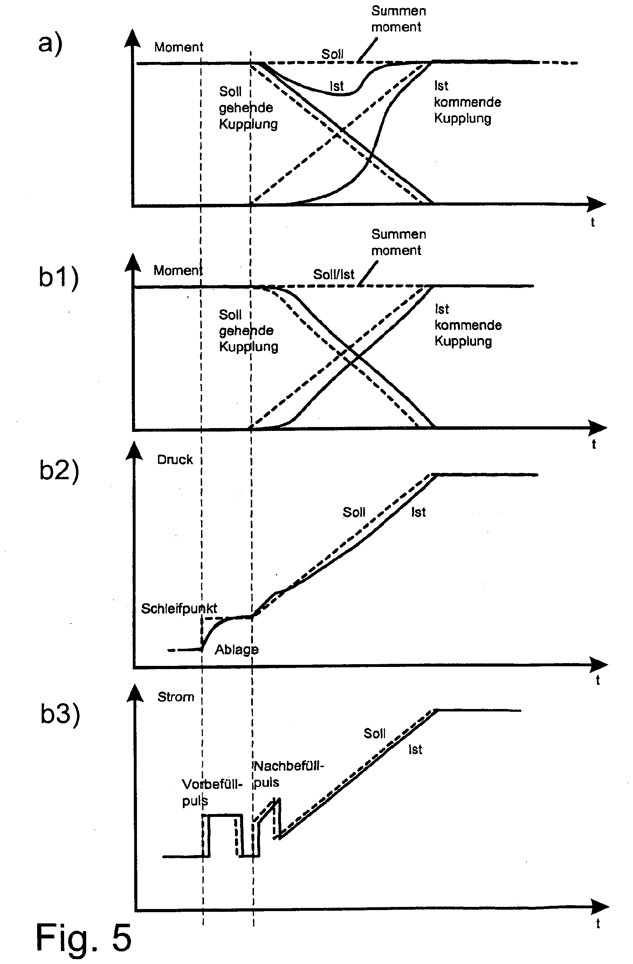

Um diesbezüglich eine Verbesserung zu erreichen, wird nach einem weiteren Aspekt der Erfindung vorgeschlagen, dem linearen Anstieg der Ventilbestromung einen Befüllungsimpuls, als Nachbefüllimpuls oder Vorbefüllimpuls oder - wenn auch die Vorbefüllung entsprechend Fig. 2 vorgesehen ist, als weiterer Vorbefüllimpuls bezeichenbar, zu überlagern, um den der kommenden Kupplungsanordnung zugeordneten Nehmerzylinder schneller mit Hydraulikdrucköl zu befüllen. Fig. 5 zeigt im Teildiagramm 3b) den entsprechenden "Nachbefüllimpuls" zusätzlich zum "Vorbefüllpuls" im Strom, was dazu führt, dass der Druck anfänglich stärker ansteigt mit entsprechend stärkerem Anstieg des übertragenen Moments der kommenden Kupplung und damit einer entsprechenden Verkürzung der Überschneidungsschaltungsphase. Durch die zusätzlich vorgesehene Druckreduzierung für die gehende Kupplung in Abhängigkeit vom erfassten Druckanstieg der kommenden Kupplung wird ein konstant bleibendes Summenmoment erreicht.

Fig. 5 zeigt speziell im Diagramm a) das Verhalten der Momente ohne erfindungsgemäßen Korrekturmaßnahmen und im Vergleich dazu im Diagramm b1) das Verhalten der Momente auf Basis des Vorbefüllimpulses und Nachbefüllimpulses und der Korrektur des Moments der gehenden Kupplung in Abhängigkeit vom Ist-Druck und damit hinsichtlich des Ist-Moments der kommenden Kupplung, wie erläutert. Man erkennt, dass das Moment der kommenden Kupplung nun fast linear ansteigt, infolge des zusätzlichen Nachbefüllimpulses, durch den der Druckanstieg deutlich beschleunigt wird und dementsprechend auch das Moment schneller aufgebaut wird.

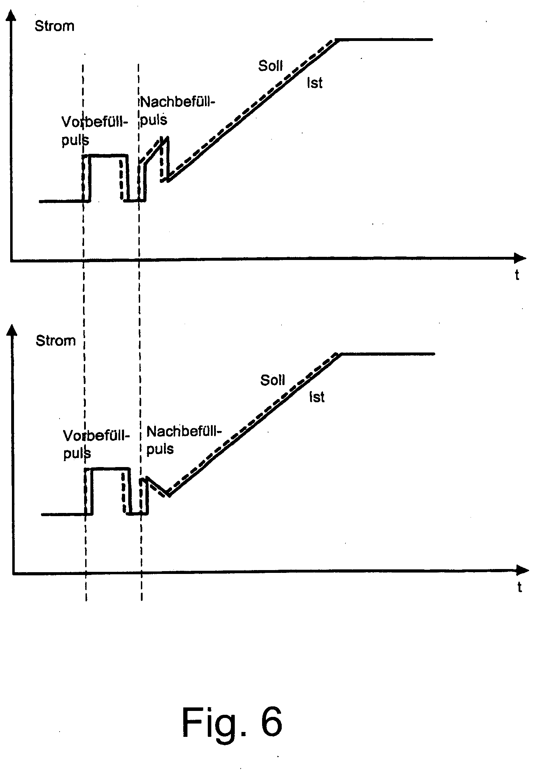

Die Impulsdauer und Impulshöhe sowohl des Vorbefüllungspulses als auch des Nachbefüllungspulses können von der Steuereinheit 28 in Abhängigkeit von verschiedenen Parametern bestimmt werden, beispielsweise in Abhängigkeit von der Öltemperatur, dem zu übertragenen Motormoment und der Steilheit des Gradienten des gewünschten Momentenanstiegs der kommenden Kupplung. Entsprechende Zusammenhänge können herstellerseitig an einem Prüfstand ermittelt und in der Steuereinheit 28 abgelegt werden. Fig. 6 veranschaulicht, dass die Amplitude des Impulses während der impulsartigen Befüllung nicht unbedingt konstant sein muss, sondern auch abfallen kann.

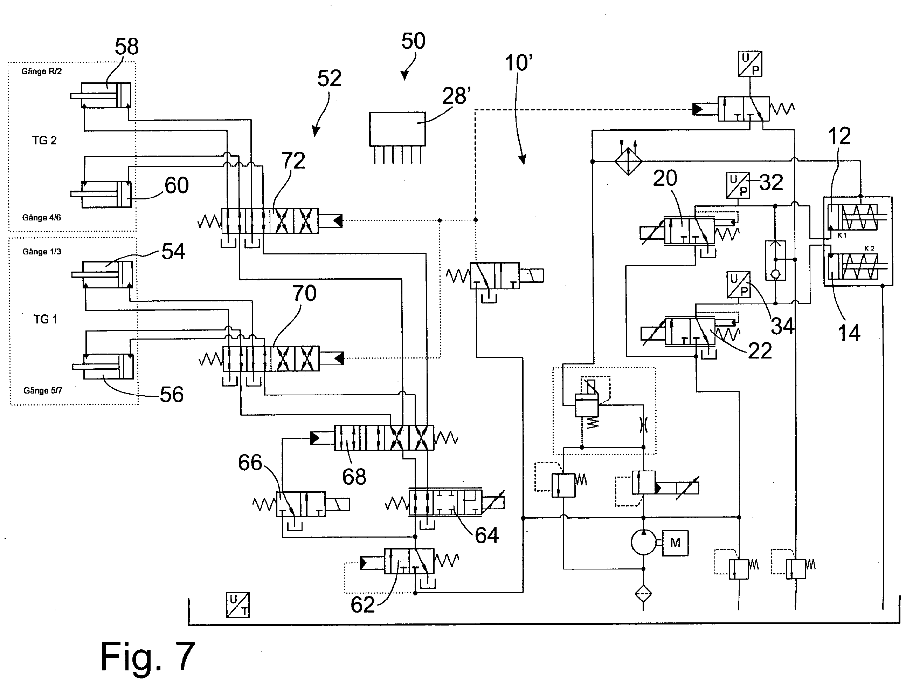

Die erfindungsgemäßen Lösungsansätze und Maßnahmen, insbesondere betreffend einen schnellen und möglichst gut einem Soll-Verlauf entsprechenden Betätigungsdruckanstieg sind auch allgemein auf hydraulische Nehmerzylinder, allgemein Druckmittelzylinder, anwendbar, speziell auch auf einer Getriebebetätigung dienende hydraulische Nehmerzylinder. Fig. 7 zeigt ein Hydrauliksystem 50 eines Kraftfahrzeug-Antriebsstrangs, mit einem Kupplungs-Betätigungsabschnitt 10' recht ähnlich dem Hydrauliksystem 10 der Fig. 1, so dass auf die Erläuterungen hierzu verwiesen werden kann, und einem Getriebe-Betätigungsabschnitt 52, der zur Betätigung des Getriebes dient mittels einem ersten Teilgetriebe zugeordneten hydraulischen Nehmerzylindern 54 und 56 zum Schalten der Gänge 1/3 und 5/7 und einem zweiten Teilgetriebe zugeordneten hydraulischen Nehmerzylindern 58 und 60 zum Schalten der Gänge R/2 und 4/6. Die beiden Teilgetriebe TG1 und TG2 bilden das Doppelkupplungsgetriebe, das der mittels der Nehmerzylinder 12 und 14 betätigbaren Doppelkupplung zugeordnet ist. Die Steuereinheit 28', die zur Kupplungsbetätigung mittels der Druckregelventile 20 und 22 dient, dient ferner auch zur Getriebebetätigung mittels der Ventile 62, 64, 66, 68, 70 und 72.

Zur Funktionsweise des Getriebebetätigungsabschnitts 52 wird auf Fig. 40 und die zugehörigen Erläuterungen in der Figurenbeschreibung der Offenlegungsschrift DE 100 04 179 A1 verwiesen. Anstelle des Getriebebetätigungsabschnitts 52 der Fig. 7 könnte auch irgendein anderer der aus dieser Offenlegungsschrift bekannten Getriebebetätigungsabschnitte vorgesehen sein.

Erfindungsgemäß könnte bei der Getriebebetätigung ein jeweiliger hydraulischer Nehmerzylinder bzw. ein jeweiliger Zylinderraumabschnitt eines hydraulischen Nehmerzylinders impulsartig befüllt oder/und vorbefüllt werden, vorausgehend bzw. überlagert einer kontinuierlichen Befüllung zur Erzielung eines bestimmten Druckaufbaus, um besser einer Soll-Kurve des Druckaufbaus zu folgen und einen schnelleren Druckaufbau zu erreichen. Dies kann die Steuereinheit 28' durch entsprechende Ansteuerung der die Druckölzufuhr zu einem jeweiligen Nehmerzylinder bzw. zu einer jeweiligen Zylinderseite eines hydraulischen Nehmerzylinders steuernden bzw. regelnden bzw. mitbeeinflussenden Ventile realisieren. Auch im Falle der Getriebebetätigung kann die Steuereinheit ein einem jeweiligen Nehmerzylinder zugeordnetes bzw. mit diesem in Hydraulikverbindung geschaltetes oder schaltbares Druckregelventil ansteuern. Es wird beispielsweise auf die Fig. 15 und 24 der DE 100 04 179 A1 verwiesen.

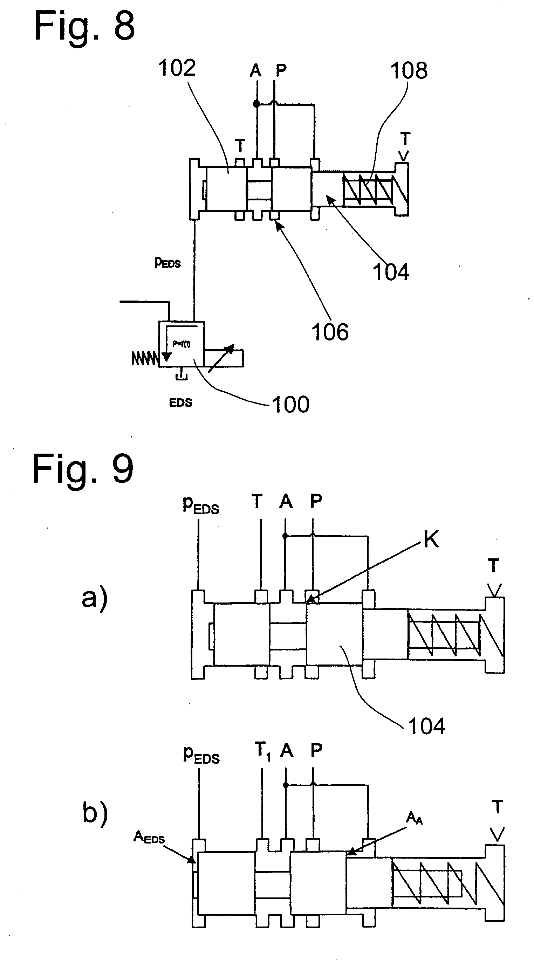

Anstelle eines Druckregelventils für die Kupplungsbetätigung und die Getriebebetätigung, sowie auch völlig unabhängig von einer speziellen Anwendungssituation, kann zweckmäßig die Kombination aus einem Vorsteuerventil 100, insbesondere so genannter "elektrischer Druck-Steller" EDS, mit einem von diesem angesteuerten Druckübersetzungsventil 102, insbesondere so genannter Nachfolgeschieber, eingesetzt werden. Das Vorsteuerventil ist durch eine jeweilige Steuereinheit, etwa die Steuereinheit 28 bzw. 28', elektrisch ansteuerbar, um einen Steuerdruck p_{EDS} an das Druckübersetzungsventil abzugeben, der den niedrigen Steuerdruck des Vorsteuerventils hydraulisch auf höhere Betätigungsdrücke übersetzt. Fig. 8 zeigt eine derartige Kombination mit einem Nachfolgeschieberventil 102, welches einen Schieber 104 in einem mit Kanälen ausgeführten Gehäuse 106 aufweist, welcher auf einer Seite durch den Steuerdruck von dem Vorsteuerventil und auf der anderen Seite von der Vorspannkraft einer Vorspannfeder 108 beaufschlagt wird. Tankanschlüsse sind mit T bezeichnet, ein Arbeitsanschluss, an dem der Betätigungsdruck abgegeben ist, ist mit A bezeichnet und ein Versorgungsdruckanschluss, an dem ein gegenüber dem Steuerdruck erhöhter Versorgungsdruck anliegt und der dann durch das Druckübersetzungsventil auf den Betätigungsdruck am Arbeitsanschluss reduziert wird, ist mit P bezeichnet.

Der elektrische Drucksteller 100 stellt proportional zum Ansteuerstrom den Vorsteuerdruck p_{EDS} am Nachfolgeschieber 102 ein, der je nach Auslegung des Nachfolgeschiebers (Federkennlinie, Geometrie, insbesondere die resultierenden wirksamen Flächen, usw.) einen entsprechenden Arbeitsdruck am Arbeitsanschluss A zur Folge hat. Gemäß Fig. 9a) befindet sich der Nachfolgeschieber in einer Regelstellung, bei der der Schieber 104 an einer Steuerkante K anliegt. Diesen Zustand nimmt der Nachfolgeschieber 102 für einen bestimmten Vorsteuerdruck ein. Fig. 9b) zeigt demgegenüber einen Ruhezustand, der sich bei einem Vorsteuerdruck von Null oder einen in Bezug auf die Federvorspannkraft deutlich zu geringen Vorsteuerdruck ergibt. Durch die Federkraft ist der Schieber 104 in eine Endlage oder in eine Lage nahe einer Endlage zurückgestellt, in der der Arbeitsanschluss A vom Versorgungsdruckanschluss P abgekoppelt ist. Anzumerken ist, dass bei einem derartigen Nachfolgeschieberventil nicht zwingend eine Vorspannfeder vorgesehen sein muss. Gleichwohl tritt eine entsprechende Ruhestellung des Schiebers auf, da dem Hydrauliksystem in der Regel zumindest ein solches Ruhe-Tankdruckniveau T₁ einstellbar ist, beispielsweise 0,3 bar, um ein Entleeren jeweiliger Kolbenräume von den hydraulischen Nehmerzylindern, etwa der Kolbenräume der Doppelkupplung bzw. der Schaltstangenaktuaotorik eines Getriebes verhindern zu können.

Bezug nehmend auf die hier in Betracht gezogenen Anwendungssituationen ist Folgendes anzusprechen. Wird im Fahrbetrieb eine Kupplung bzw. Kupplungsanordnung (z. B. bei einer Konstantfahrt in einem Gang) nicht betätigt oder werden im Falle einer Doppelkupplung die Doppelkupplungsanordnungen (z. B. im Leerlauf oder bei Fahrzeugstillstand) nicht betätigt oder wird kein Gang eingelegt oder ausgelegt, so sind im Falle einer hydraulischen Betätigung mittels einer Kombination entsprechend Fig. 8 die geforderten Arbeitsdrücke am Anschluss A an sich gleich Null, entsprechend einem Vorsteuerdruck p_{EDS} gleich Null. Ein derartiger verschwindender Vorsteuerdruck führt dazu, dass der Nachfolgeschieber in die Position entsprechend Fig. 9b) zurückgestellt wird. Dies gilt, wie schon angesprochen, auch für Schieber ohne Rückstellfeder, da sich auch hier eine Ruhelage entsprechend dieser Position einstellt, da im Doppelkupplungssystem zumindest ein Ruhe-Tankdruckniveau T₁ eingestellt werden sollte, um ein Entleeren der Kolbenräume der Doppelkupplung bzw. der Kolbenräume der Schaltstangen zu verhindern. Ist der EDS-Ansteuerdruck (z. B. 0,05 bar) kleiner als das anliegende Tankdruckniveau T₁, so wird unter Berücksichtigung der Schieberübersetzung EDS-Druck zu Arbeitsdruck (p_{EDS}/p_{A} = A_{AS}/A_{EDS}, mit in diesem Fall p_{A} = p_{T1}) der Schieber in die linke Ruhestellung entsprechend Fig. 9b) bewegt. Dies ergibt sich daraus, dass beispielsweise ein Tankdruck von 0,3 bar auf Basis einer angenommenen Schieberübersetzung von 1:2 beispielsweise 0,15 bar EDS-Ansteuerdruck entspricht, so dass bei einem EDS-Ansteuerdruck kleiner als 0,15 bar der Schieber nach links bewegt wird.

Wird nur ausgehend von einem solchen Ruhezustand eine Schaltung bzw. ein Einrücken der Kupplung (oder alternativ ein Ausrücken einer Kupplung des NORMALERWEISE-GESCHLOSSEN-Typs) angefordert, ist normalerweise ein schneller Druckaufbau vom Tankdruck auf den Betätigungsdruck gefordert. Hierzu muss der Nachfolgeschieber aus seiner Endlage entsprechend Fig. 9b) zuerst in seine Regelstellung entsprechend Fig. 9a) gebracht werden, was eine gewisse Zeit dauert und somit einen gewissen Zeitverzug oder eine Totzeit mit sich bringt.

Erfindungsgemäß wird nach einem weiteren Aspekt vorgeschlagen, solche Totzeiten bei der Befüllung eines hydraulischen Nehmerzylinders, etwa für eine Kupplungsbetätigung oder eine Schaltstangenbetätigung, zu minimieren, indem eine Vorbestromung des Vorsteuerventils vorgesehen ist, die das Druckübersetzungsventil vorbereitend in die Regelstellung bringt bzw. in der Regelstellung hält, so dass im Falle des Nachfolgeschieberventils 102 der Fig. 8 der Schieber sich bereits an der Steuerkante und damit im Regelzustand gemäß Fig. 9a) befindet und somit die Zeit für eine Verstellung aus dem Zustand der Fig. 9b) in den Zustand der Fig. 9a) vermieden wird.

Der aus der Vorbestromung resultierende Arbeitsdruck sollte so eingestellt werden, dass er zu keinen ungewollten Betätigungen, etwa ein ungewolltes Kupplungsschließen oder eine ungewollte Gangbetätigung, führt. Im Falle einer Kupplung kann ein Druckniveau eingestellt werden, welches niedriger als der Druck zur Überwindung einer Rückstellfedervorspannung, insbesondere Tellerfedervorspannung ist, insbesondere ein Druck unterhalb des so genannten Berührungspunkts oder "Touch-Points".

In der Regel wird eine solche Vorbestromung aber mit erhöhten Leckagen gegenüber dem Ruhezustand der Fig. 9b) verbunden sein, so dass es besonders bevorzugt ist, wenn die Vorbestromung nur dann aktiviert ist bzw. aktiviert bleibt, wenn eine Druckmediumversorgung, etwa eine Druckölpumpe, ausreichenden Volumenstrom zur Verfügung stellt, um die bestehenden Anforderungen zu erfüllen, etwa die Nehmerzylinderbefüllung, die Kühlung einer nasslaufenden Kupplung, insbesondere Doppelkupplung, die Schmierung des Getriebes usw. Im Falle einer verbrennungsmotorisch angetriebenen Pumpe kann zweckmäßig eine Volumenstrom-Schwelle für das Aktivieren der Vorbestromung von der Motordrehzahl und der Öltemperatur abhängig sein. Eine das Vorsteuerventil ansteuernde Steuereinheit, etwa die Steuereinheit 28 bzw. 28' im Falle entsprechender Weiterbildungen der Hydrauliksysteme der Fig. 1 und 7, kann mittels entsprechender Sensoren die Motordrehzahl und die Öltemperatur erfassen und in Abhängigkeit hiervon durch entsprechende Ansteuerung des Vorsteuerventils 100 das Druckübersetzungsventil zwischen dem Regelzustand gemäß Fig. 9a) und dem Ruhezustand gemäß Fig. 9b) umschalten. Man kann auch vorsehen, dass oberhalb einer gewissen Schwelle, z. B. einem Volumenstrom von 20 l/min, die Vorbestromung des Vorsteuerventils für die Einstellung des Regelzustands gemäß Fig. 9a) immer aktiv ist.

Befindet sich hingegen der zur Verfügung stehende Hydraulikölvolumenstrom innerhalb eines Bereiches unterhalb einer solchen Schwelle, so ist es bevorzugt, dass die Vorbestromung immer dann abgeschaltet wird, wenn für die Kupplungskühlung der maximal verfügbare Volumenstrom angefordert wird, und eine jeweils andere Einrichtung hydraulisch zu betätigen ist, beispielsweise eine Kupplung einzurücken ist oder ein Gang des Getriebes eingelegt oder ausgelegt werden soll, so dass der jeweils für diese Betätigung zur Verfügung stehende Hydraulikölvolumenstrom möglichst groß ist und nicht durch Leckagen an dem momentan für die Betätigung nicht benötigten Druckübersetzungsventil und hydraulisch daran angeschlossenen weiteren Komponenten reduziert wird.

Zweckmäßig kann das Zu- und Abschalten gemäß einer Hysterese erfolgen, um ein ständiges Hin- und Herschalten bei kleinen Temperatur- oder Drehzahländerungen zu vermeiden.

Im Falle eines elektrohydraulischen Systems mit einem hydraulischen Druckspeicher kann es zweckmäßig sein, die Vorbestromung temperaturabhängig und in Abhängigkeit von dem im Druckspeicher gespeicherten Hydraulikölvolumen zu- und abzuschalten. Beispielsweise kann die Vorbestromung deaktiviert werden, wenn der Speicher zu weniger als 50% gefüllt ist.

Auch im Falle der Ansteuerung eines jeweiligen hydraulischen Nehmerzylinders mittels einer Ventilkombination entsprechend Fig. 8 ist es ohne weiteres möglich, die Füllimpulse (Vorbefüllimpulse bzw. Nachbefüllimpulse) an Hydrauliköl an einen jeweiligen hydraulischen Nehmerzylinder abzugeben bzw. den Arbeitsanschlussdruck eines Druckübersetzungsventils in Abhängigkeit von der Änderung, insbesondere der Erhöhung, des Drucks am Arbeitsanschluss eines anderen Druckübersetzungsventils zu ändern, insbesondere zu reduzieren, so dass die anhand der Fig. 1 bis 7 beispielhaft erläuterten Erfindungs- und Weiterbildungsvorschläge auch im Zusammenhang mit einer Kombination eines Vorsteuerventils und eines Druckübersetzungsventils anwendbar sind.

Vorgeschlagen wird unter anderem ein Betätigungsverfahren zur Betätigung mittels einer Aktuatoranordnung (12, 14; 54, 56, 58, 60) auf Grundlage von vermittels wenigstens einem Ventil (20, 22; 62, 64, 66, 68, 70, 72) der Aktuatoranordnung zugeführtem Druckmedium, umfassend eine impulsartige Vorbefüllung eines Nehmerzylinders der Aktuatoranordnung mit Druckmedium vorausgehend einer kontinuierlichen Befüllung des Nehmerzylinders für die Ausübung einer Soll-Betätigungskraft oder Soll-Einrückkraft durch die Aktuatoranordnung bzw. wenigstens eine der Aktuatoranordnungen oder/und für die Erhöhung der mittels der Aktuatoranordnung bzw. wenigstens eine der Aktuatoranordnungen ausgeübten Soll-Betätigungskraft oder Soll-Einrückkraft gemäß einer Soll-Kennlinie oder/und umfassend eine der kontinuierlichen Befüllung des Nehmerzylinders überlagerte impulsartige Vorbefüllung oder weitere impulsartige Vorbefüllung des Nehmerzylinders oder/und zur aufeinander abgestimmten Betätigung mittels mehreren Aktuatoranordnungen (12, 14) auf Grundlage von vermittels wenigstens einem jeweiligen Ventil (20; 22) der jeweiligen Aktuatoranordnung zugeführtem Druckmedium, umfassend die Reduzierung oder Erhöhung des Drucks des an wenigstens einem Nehmerzylinder einer Aktuatoranordnung anliegenden Druckmediums in Abhängigkeit von dem Druck des an wenigstens einem Nehmerzylinder einer anderen Aktuatoranordnung anliegenden Druckmediums oder/und zur Betätigung mittels einer Aktuatoranordnung auf Grundlage von vermittels wenigstens einem Vorsteuerventil (100) und wenigstens einem diesem nachgeschalteten Druckübersetzungsventil, ggf. Nachfolgeschieberventil (102), der Aktuatoranordnung zugeführtem Druckmedium, insbesondere im Zusammenhang mit der Betätigung eines Getriebes oder/und einer Kupplung eines Kraftfahrzeug-Antriebsstrangs. Die Erfindung betrifft ferner einen entsprechenden Kraftfahrzeug-Antriebsstrang.

## Patentansprüche

1. Kraftfahrzeug-Antriebsstrang, umfassend eine Antriebseinheit, ein Getriebe und ein Kupplungssystem mit einer zwischen der Antriebseinheit und dem Getriebe angeordneten Kupplungseinrichtung zur Momentenübertragung zwischen der Antriebseinheit und dem Getriebe, wobei wenigstens eines von der Kupplungseinrichtung und dem Getriebe unter Vermittlung von Druckmedium betätigbar ist, welches über ein Druckmediumsystem an einer Aktuatoranordnung (12, 14) der Kupplungseinrichtung bzw. einer Aktuatoranordnung (54, 56, 58, 60) des Getriebes mit steuerbarem oder regelbarem Druck unter der Steuerung bzw. Regelung durch eine wenigsten ein Ventil (20, 22; 64, 66, 70, 72) des Druckmediumsystems ansteuernde Steuereinheit (28; 28') anlegbar ist, derart, dass die Steuereinheit (28; 28') dafür ausgeführt oder programmiert ist,
- für die Ausübung einer Soll-Betätigungskraft durch die wenigstens eine Aktuatoranordnung (12, 14; 54, 56, 58, 60) oder/und
- für die Erhöhung der mittels der wenigstens einen Aktuatoranordnung bzw. ausgeübten Soll-Betätigungskraft gemäß einer Soll-Kennlinie wenigstens ein der Aktuatoranordnung zugeordnetes Ventils des Druckmediumsystems
- zuerst für die Abgabe eines Vorbefüllungsvolumens an Druckmedium an die Aktuatoranordnung impulsartig anzusteuern und
- dann das Ventil für die Ausübung der Soll-Betätigungskraft durch die Aktuatoranordnung bzw. für die Erhöhung der mittels der Aktuatoranordnung ausgeübten Soll-Betätigungskraft gemäß der Soll-Kennlinie anzusteuern.

2. Kraftfahrzeug-Antriebsstrang nach Anspruch 1, **dadurch gekennzeichnet, dass** die Steuereinheit (28; 28') dafür ausgeführt oder programmiert ist, für die Erhöhung der mittels der Aktuatoranordnung (12, 14; 54, 56, 58, 60) bzw. der wenigstens einen der Aktuatoranordnungen ausgeübten Soll-Betätigungskraft gemäss der Soll-Kennlinie in einer Anfangsphase der Ansteuerung gemäss der Soll-Kennlinie einer einen Anstieg der Soll-Kennlinie widerspiegelnden Ansteuerung des Ventils eine impulsartige Ansteuerung des Ventils für die Abgabe eines weiteren Vorbefüllungsvolumens an Druckmedium an die Aktuatoranordnung zu überlagern.

3. Kraftfahrzeug-Antriebsstrang nach einem der Ansprüche 1 bis 4, **dadurch gekennzeichnet, dass** die Kupplungseinrichtung als Mehrfach-Kupplungseinrichtung, insbesondere Doppel-Kupplungseinrichtung, ausgeführt ist, umfassend eine erste Kupplungsanordnung, der wenigstens ein erster Nehmerzylinder (12) der Aktuatoranordnung zugeordnet ist, und eine zweite Kupplungsanordnung, der wenigstens ein zweiter Nehmerzylinder (14) der Aktuatoranordnung zugeordnet ist, wobei an den beiden Nehmerzylindern unabhängig voneinander durch wenigstens ein jeweils zugeordnetes Ventil (20; 22) Druckmedium mit steuerbarem bzw. regelbarem Druck anlegbar ist.

4. Kraftfahrzeug-Antriebsstrang nach Anspruch 3, **dadurch gekennzeichnet, dass** die Steuereinheit (28; 28') dafür ausgeführt oder programmiert ist, das wenigstens eine dem ersten Nehmerzylinder (12) zugeordnete Ventil (20) und das wenigstens eine dem zweiten Nehmerzylinder (14) zugeordnete Ventil (22) jeweils für die Abgabe des Vorbefüllungsvolumens an den betreffenden Nehmerzylinder oder/und für die Abgabe des weiteren Vorbefüllungsvolumens an den betreffenden Nehmerzylinder anzusteuern.

5. Kraftfahrzeug-Antriebsstrang nach einem der Ansprüche 3 oder 4, **dadurch gekennzeichnet, dass** die Steuereinheit (28; 28') dafür ausgeführt oder programmiert ist, den Druck des an zumindest einem des ersten und zweiten Nehmerzylinder angelegten bzw. anliegenden Druckmediums mittels eines dem Nehmerzylinder zugeordneten Drucksensors (32; 34) zu erfassen und das dem anderen des ersten und zweiten Nehmerzylinders zugeordnete Ventil in Abhängigkeit von diesem erfassten Druck anzusteuern.

6. Kraftfahrzeug-Antriebsstrang nach einem der Ansprüche 1 bis 5, **dadurch gekennzeichnet, dass** der Aktuatoranordnung oder wenigstens einer der Aktuatoranordnungen wenigstens ein durch die Steuereinheit (28; 28') elektrisch ansteuerbares Vorsteuerventil (100) und ein diesem im Druckmediumsystem nachgeschaltetes Druckübersetzungsventil, ggf. Nachfolgeschieberventil (102), zugeordnet ist, wobei das Druckübersetzungsventil vom Vorsteuerventil unter der Ansteuerung durch die Steuereinheit abgegebenes Druckmedium empfängt und in Abhängigkeit vom Druck des empfangenen Druckmediums Druckmedium auf einem höheren Druckniveau an die Aktuatoranordnung abgibt.

## Claims

1. Motor vehicle drive train, comprising a drive unit, a transmission and a clutch system with a clutch device which is arranged between the drive unit and the transmission for the transmission of torque between the drive unit and the transmission, it being possible for at least one of the clutch device and the transmission to be actuated via pressure medium which can be applied via a pressure medium system to an actuator arrangement (12, 14) of the clutch device or an actuator arrangement (54, 56, 58, 60) of the transmission at a controllable or regulatable pressure under the control or regulation by way of a control unit (28; 28') which actuates at least one valve (20, 22; 64, 66, 70, 72) of the pressure medium system, in such a way that the control unit (28; 28') is configured or programmed,
- for the exertion of a setpoint actuating force by way of the at least one actuator arrangement (12, 14; 54, 56, 58, 60), and/or
- for the increase of the setpoint actuating force which is exerted by means of the at least one actuator arrangement or in accordance with a setpoint characteristic curve of at least one valve of the pressure medium system, which valve is assigned to the actuator arrangement,
- to first of all actuate in a pulse-like manner for the output of a prefilling volume of pressure medium to the actuator arrangement, and
- then to actuate the valve for the exertion of the setpoint actuating force by way of the actuator arrangement or for the increase of the setpoint actuating force which is exerted by means of the actuator arrangement in accordance with the setpoint characteristic curve.

2. Motor vehicle drive train according to Claim 1, **characterized in that** the control unit (28; 28') is configured or programmed, for the increase of the setpoint actuating force which is exerted by means of the actuator arrangement (12, 14; 54, 56, 58, 60) or the at least one of the actuator arrangements, to superimpose a pulse-like actuation of the valve for the output of a further prefilling volume of pressure medium to the actuator arrangement on an actuation of the valve, which actuation reflects a rise of the characteristic curve, in a starting phase of the actuation in accordance with the setpoint characteristic curve.

3. Motor vehicle drive train according to one of Claims 1 to 4, **characterized in that** the clutch device is configured as a multiple clutch device, in particular a double clutch device, comprising a first clutch arrangement which is assigned at least one first slave cylinder (12) of the actuator arrangement, and a second clutch arrangement which is assigned at least one second slave cylinder (14) of the actuator arrangement, it being possible for pressure medium to be applied at a controllable or regulatable pressure to the two slave cylinders independently of one another by way of at least one respectively assigned valve (20; 22) .

4. Motor vehicle drive train according to Claim 3, **characterized in that** the control unit (28; 28') is configured or programmed to actuate the at least one valve (20) which is assigned to the first slave cylinder (12) and the at least one valve (22) which is assigned to the second slave cylinder (14) in each case for the output of the prefilling volume to the relevant slave cylinder and/or for the output of the further prefilling volume to the relevant slave cylinder.

5. Motor vehicle drive train according to either of Claims 3 and 4, **characterized in that** the control unit (28; 28') is configured or programmed to detect the pressure of the pressure medium which is applied or prevails on at least one of the first and second slave cylinder by means of a pressure sensor (32; 34) which is assigned to the slave cylinder, and to actuate the valve which is assigned to the other one of the first and second slave cylinder in a manner which is dependent on the said detected pressure.

6. Motor vehicle drive train according to one of Claims 1 to 5, **characterized in that** the actuator arrangement or at least one of the actuator arrangements is assigned at least one pilot control valve (100) which can be actuated electrically by way of the control unit (28; 28') and one pressure intensifying valve, or possibly emulating slide valve (102), which is connected downstream of the said pilot control valve (100) in the pressure medium system, the pressure intensifying valve receiving pressure medium which is output by the pilot control valve under the actuation by way of the control unit, and outputting pressure medium at a higher pressure level to the actuator arrangement in a manner which is dependent on the pressure of the received pressure medium.

## Revendications

1. Chaîne cinématique de véhicule automobile, comprenant une unité d'entraînement, une transmission et un système d'embrayage avec un dispositif d'embrayage disposé entre l'unité d'entraînement et la transmission pour le transfert de couple entre l'unité d'entraînement et la transmission, au moins l'un parmi le dispositif d'embrayage et la transmission pouvant être actionné par l'intermédiaire d'un fluide sous pression qui peut être appliqué par le biais d'un système de fluide sous pression à un agencement d'actionneur (12, 14) du dispositif d'embrayage ou à un agencement d'actionneur (54, 56, 58, 60) de la transmission avec une pression commandable ou réglable sous la commande ou la régulation par le biais d'une unité de commande (28 ; 28') commandant au moins une soupape (20, 22 ; 64, 66, 70, 72) du système de fluide sous pression, de telle sorte que l'unité de commande (28 ; 28') soit réalisée ou programmée de manière à :
- pour exercer une force d'actionnement de consigne par l'au moins un agencement d'actionneur (12, 14 ; 54, 56, 58, 60) et/ou
- pour augmenter la force d'actionnement de consigne exercée au moyen de l'au moins un agencement d'actionneur ou selon une courbe caractéristique de consigne, commander de manière impulsionnelle au moins une soupape associée à l'agencement d'actionneur du système de fluide sous pression,
- tout d'abord pour délivrer un volume de préremplissage de milieu sous pression à l'agencement d'actionneur et
- ensuite commander la soupape pour exercer la force d'actionnement de consigne par l'agencement d'actionneur ou pour augmenter la force d'actionnement de consigne exercée au moyen de l'agencement d'actionneur en fonction de la courbe caractéristique de consigne.

2. Chaîne cinématique de véhicule automobile selon la revendication 1, **caractérisée en ce que** l'unité de commande (28 ; 28'), pour augmenter la force d'actionnement de consigne exercée au moyen de l'agencement d'actionneur (12, 14 ; 54, 56, 58, 60) ou de l'au moins un des agencements d'actionneurs en fonction de la courbe caractéristique de consigne dans une phase initiale de la commande selon la courbe caractéristique de consigne, est réalisée ou programmée pour superposer à une commande de la soupape reproduisant une augmentation de la courbe caractéristique de consigne, une commande impulsionnelle de la soupape pour délivrer un volume de préremplissage supplémentaire de fluide sous pression à l'agencement d'actionneur.

3. Chaîne cinématique de véhicule automobile selon l'une quelconque des revendications 1 à 4, **caractérisée en ce que** le dispositif d'embrayage est réalisé sous forme de dispositif d'embrayage multiple, en particulier sous forme de dispositif de double embrayage comprenant un premier agencement d'embrayage auquel est associé au moins un premier cylindre récepteur (12) de l'agencement d'actionneur, et un deuxième agencement d'embrayage auquel est associé au moins un deuxième cylindre récepteur (14) de l'agencement d'actionneur, un fluide sous pression avec une pression commandable ou réglable pouvant être appliqué aux deux cylindres récepteurs indépendamment l'un de l'autre par au moins une soupape respectivement associée (20 ; 22).

4. Chaîne cinématique de véhicule automobile selon la revendication 3, **caractérisée en ce que** l'unité de commande (28 ; 28') est réalisée ou programmée de manière à commander l'au moins une soupape (20) associée au premier cylindre récepteur (12) et l'au moins une soupape (22) associée au deuxième cylindre récepteur (14) à chaque fois pour délivrer le volume de préremplissage aux cylindres récepteurs concernés et/ou pour délivrer le volume de préremplissage supplémentaire aux cylindres récepteurs concernés.

5. Chaîne cinématique de véhicule automobile selon l'une quelconque des revendications 3 ou 4, **caractérisée en ce que** l'unité de commande (28 ; 28') est réalisée ou programmée de manière à détecter la pression du fluide sous pression appliquée ou s'appliquant à au moins l'un parmi le premier et le deuxième cylindre récepteur au moyen d'un capteur de pression (32 ; 34) associé au cylindre récepteur et pour commander la soupape associée à l'autre parmi le premier et le deuxième cylindre récepteur en fonction de cette pression détectée.

6. Chaîne cinématique de véhicule automobile selon l'une quelconque des revendications 1 à 5, **caractérisée en ce qu'**à l'agencement d'actionneur ou à au moins l'un des agencements d'actionneurs est associée au moins une soupape pilote (100) pouvant être commandée électriquement par l'unité de commande (28 ; 28') et une soupape de transmission de pression montée en aval de celle-ci dans le système de fluide sous pression, éventuellement une soupape de distribution suiveuse (102), la soupape de transmission de pression recevant de la soupape pilote, le fluide sous pression délivré sous la commande par l'unité de commande, et en fonction de la pression du fluide sous pression reçue, délivrant le fluide sous pression à un niveau de pression plus élevé à l'agencement d'actionneur.
